# FASCICULE DE BREVET EUROPEEN

(11) **EP 2 046 683 B1**
(45) Date de publication et mention de la délivrance du brevet: **03.09.2014**
(21) Numéro de dépôt: 07803867.6
(22) Date de dépôt: 13.07.2007
(51) Int. Cl.: B82Y 30/00, C01B 33/40, C09C 1/28, C01B 33/22

(54) **PROCÉDÉ DE PRÉPARATION D'UNE COMPOSITION DE TALC SYNTHÉTIQUE Á PARTIR D'UNE COMPOSITION DE KÉROLITES**
VERFAHREN ZUR HERSTELLUNG EINER SYNTHETISCHEN TALKZUSAMMENSETZUNG AUS EINER KEROLITZUSAMMENSETZUNG
METHOD FOR PREPARING A SYNTHETIC TALC COMPOSITION FROM A KEROLITE COMPOSITION

(30) Priorité: 17.07.2006 FR 0606476
(43) Date de publication de la demande: 15.04.2009
(73) Titulaire: Luzenac Europe SAS, 31100 Toulouse (FR); CENTRE NATIONAL DE LA RECHERCHE SCIENTIFIQUE (CNRS), 75016 Paris (FR)
(72) Inventeur: MARTIN, François, F-31570 St Foy d'Aigrefeuille (FR); FERRET, Jocelyne, F-31100 Toulouse (FR); LEBRE, Cédric, 46140 Luzech (FR); PETIT, Sabine, F-86210 Bonneuil Matours (FR); GRAUBY, Olivier, F-13390 Auriol (FR); BONINO, Jean-Pierre, F-31320 Pechabou (FR); ARSEGUEL, Didier, F-31450 Deyme (FR); DECARREAU, Alain, F-86000 Poitiers (FR); FERRAGE, Eric, F-31500 Toulouse (FR)
(74) Mandataire: Cabinet BARRE LAFORGUE & associés
(86) Numéro de dépôt international: PCT/FR2007/001202
(87) Numéro de publication internationale: WO 2008/009801

(56) Documents cités:
- DE-A1- 10 125 879
- DECARREAU, MONDESIR, BESSON: "Synthèse et stabilité des stévensites kérolites et talcs, magnésiens et nickelifères, entre 80 et 240°C" C. R. ACAD. SCI. PARIS, vol. 308, no. II, 1989, pages 301-306, XP008075903
- MARTIN, PETIT, DECARREAU, GRAUBY, HAZEMANN, NOACK: "Experimental study of Si-Ge tetrahedral solid solution in Ni-Co-Mg talcs" THIN SOLID FILMS, vol. 222, 1992, pages 189-195, XP002422974

## Description

L'invention concerne un procédé de préparation d'une composition de talc synthétique comprenant des particules de talc thermiquement stable, ayant pour formule Si₄Mg₃O₁₀(OH)₂. Selon les paramètres particuliers appliqués lors de la mise en oeuvre de ce procédé, la granulométrie de ces particules de talc synthétique varie de quelques dizaines de nanomètres à une dizaine de micromètres, avec une distribution sensiblement unimodale et monodisperse.

Le talc naturel est un minéral, un silicate de magnésium hydraté de formule Si₄Mg₃O₁₀(OH)₂, disposé en un empilement de feuillets.

Utilisé essentiellement sous forme de fines particules, le talc trouve des applications dans de nombreux secteurs industriels : les thermoplastiques, les élastomères, le papier, la peinture, les vernis, le textile, la métallurgie, la pharmaceutique, la cosmétique, les produits phytosanitaires, les engrais... où il est incorporé dans les compositions, comme charge inerte (pour sa stabilité chimique, par exemple, pour diluer les substances actives, les matériaux coûteux) ou comme adjuvant fonctionnel (par exemple, pour rectifier/renforcer certaines propriétés mécaniques ou électriques de divers matériaux), comme lubrifiant, émollient, agent hydrofuge... Egalement, sa forte capacité d'absorption des huiles ouvre de nombreuses perspectives dans le développement de nouvelles techniques de dépollution.

Pour certaines de ces applications, une pureté élevée, une grande lamellarité et une finesse particulière des particules, ainsi qu'une distribution granulométrique et lamellaire étroite, sont recherchées car elles peuvent être déterminantes pour la qualité du produit final.

Or, pour préparer une composition pulvérulente à partir de blocs de talc naturel, les techniques traditionnelles de broyage et de traitement du talc ne permettent aucune maîtrise réellement précise des critères précédemment évoqués.

En effet, il n'existe actuellement aucune composition solide divisée de talc naturel qui soit pure à 100 % ; les particules de cette composition ne répondent pas toutes à la formule chimique Si₄Mg₃O₁₀(OH)₂, qui n'est ainsi que très théorique. Le degré de pureté et la nature des impuretés (teneurs plus ou moins importantes en Fe, Al, F, et des traces de Mn, Ti, Cr, Ni, Ca, Na et/ou K) d'un talc naturel est fonction du gisement d'origine.

Egalement, la granulométrie (finesse et distribution granulométrique des particules pulvérulentes) dépend essentiellement des techniques de broyage mécanique et du matériel qui sont employés. A partir d'un talc naturel, les poudres obtenues par broyage mécanique ont généralement une granulométrie de l'ordre de quelques micromètres à quelques centaines de micromètres.

Outre une fluctuation non négligeable de la distribution granulométrique des particules, le broyage mécanique entraîne une détérioration structurelle progressive et significative du talc et l'apparition de nombreux défauts dans sa structure cristalline. Plus le broyage est fin et plus la structure cristalline initiale s'en trouve altérée.

A ce titre, on connaît le NANOTALC^{®}, une composition pulvérulente de talc naturel comprenant des particules de 70-120 nm, préparée avec une méthode de broyage mécanique particulièrement intensive. Hormis une structure cristalline très altérée du minéral, comme toute composition préparée à partir d'un talc naturel, le NANOTALC^{®} n'est pas pur à 100 %.

Par ailleurs, la préparation de talcs synthétiques a fait l'objet d'études théoriques et scientifiques depuis de nombreuses années, sans aboutir jusqu'à maintenant à des résultats pratiques satisfaisants -notamment compatibles avec les contraintes de qualité et de rentabilité d'une exploitation à l'échelle industrielle-.

La publication Decarreau et al., 1989 ("Synthèse et stabilité des stévensites kérolites et talcs, magnésiens et nickelifères, entre 80 et 240°C" -R. Acad. Scie. Paris-, t. 308, série II, p.301-306) mentionne un procédé qui, selon les conditions opératoires appliquées, conduit à la formation plus ou moins spécifique de stévensites, de kérolites et/ou de talcs.

Ce procédé débute par la formation d'un coprécipité initial obtenu par une réaction entre une solution de métasilicate de sodium avec une solution de chlorure de magnésium (ou de Nickel). On obtient alors un gel silicométallique fortement hydraté, de consistance gélatineuse et ayant pour formule chimique : Si₄Mg₃O₁₁,n'H₂O (ou Si₄Ni₃O₁₁, n'H₂O). Une série de centrifugation et de lavage à l'eau distillée permet de débarrasser ce gel silicométallique du NaCl formé à l'issue de la réaction de coprécipitation.

Le gel silicométallique est ensuite soumis à une dessiccation poussée permettant de transformer cette composition, fortement hydratée et de texture gélatineuse, en une composition silicométallique solide et déshydratée, ayant pour formule chimique Si₄Mg₃O₁₁• nH₂O ; n faisant référence aux quelques molécules d'eau formant un complexe particulièrement stable avec la matière solide, emprisonnées à l'intérieur des pores de cette substance solide (ici, n<<n'). Cette composition silicométallique solide et déshydratée est ensuite broyée/pulvérisée en une fine poudre, avant d'être soumise à un traitement hydrothermal à pression de vapeur d'eau saturante. A cet effet, la poudre est dispersée dans de l'eau distillée (par exemple, 200 mg de poudre pour 30 cm³). Le mélange est placé dans un autoclave métallique, à revêtement intérieur en polytétrafluoroéthylène (Téflon®). La durée de ce traitement hydrothermal, peut être d'une quinzaine de jours à quelques mois, et la température de traitement peut varier entre 80°C et 240°C.

Cette publication indique qu'un traitement hydrothermal d'une quinzaine de jours, effectué à des températures inférieures à 100°C, conduirait à la formation de stévensites. A des températures de l'ordre de 110-140°C, le traitement conduirait à des kérolites, et à des températures de l'ordre de 170-240°C, on obtiendrait des talcs.

S'agissant des talcs préparés par cette méthode, des expériences de rétromorphose (réalisées notamment à 135°C) ont permis aux auteurs de cette publication de constater une instabilité structurelle qui se traduit par une diminution de la cristallinité et une dérive vers la formation de kérolites.

La méthode de synthèse hydrothermale telle que décrite par la publication Decarreau et *al.*, 1989 ne permet donc pas d'aboutir à une composition de talc de qualité satisfaisante -notamment en terme de cristallinité et de stabilité thermique-.

La présente invention a pour objectif de proposer des compositions de talc synthétique ayant une structure lamellaire et cristalline, ainsi qu'une stabilité thermique très comparables à celles des talcs naturels.

L'invention vise en particulier à proposer un nouveau procédé de préparation d'une telle composition de talc synthétique dont la mise en oeuvre est simple et rapide, et qui est compatible avec les contraintes d'une exploitation à échelle industrielle. En particulier, elle vise à améliorer la méthode de synthèse décrite par la publication Decarreau et *al.*, 1989 ; notamment en remédiant à l'instabilité thermique de la structure cristalline des "talcs" obtenus par la méthode décrite dans cette publication.

L'invention a également pour objectif de proposer un procédé permettant l'obtention de compositions pulvérulentes de talc synthétique de grande pureté, comprenant des particules minérales de grande finesse et ayant une répartition dimensionnelle sensiblement unimodale et monodisperse.

Pour ce faire, l'invention concerne un procédé de préparation d'une composition de talc synthétique, dans lequel on soumet une composition de kérolites à un traitement thermique anhydre effectué à une pression inférieure à 5 bars, pendant une durée (notamment allant de quelques heures à plusieurs jours) et avec une température de traitement supérieure à 300°C. La durée et la température du traitement thermique anhydre sont choisies de façon à obtenir des particules de talc synthétique thermiquement stable et de formule Si₄Mg₃O₁₀(OH)₂.

L'invention découle de la constatation essentielle et surprenante qu'un traitement thermique anhydre, réalisé à une température au moins supérieure à 300°C, permet de façon extrêmement simple de convertir une composition de kérolites en une composition de talc synthétique stable et pure, de caractéristiques très précisément définies et prévisibles.

Tout particulièrement, les inventeurs ont mis en évidence qu'un traitement thermique anhydre conforme à l'invention a pour effet d'induire une réorganisation progressive de la structure lamellaire "pseudo-cristalline et hydratée" d'une kérolite en réduisant les lacunes du réseau cristallin, et le relâchement des molécules d'eau piégées dans les espaces interfoliaires.

Un traitement thermique anhydre réalisé à 300°C permet effectivement d'induire des modifications notables sur la structure des kérolites (modifications décelables notamment par les méthodes d'analyse en infrarouges et en diffraction des rayons X) susceptible de conduire à l'obtention d'un talc synthétique.

Avantageusement et selon l'invention, on réalise donc le traitement thermique anhydre à une température de l'ordre de 500-550°C. A une telle température, on obtient un talc synthétique en 5 heures environ. Avantageusement et selon l'invention, pour obtenir des particules de talc synthétique thermiquement stable, la durée de traitement est supérieure à 5 heures

Avantageusement et selon l'invention, on réalise le traitement thermique anhydre à l'air ambiant, à l'intérieur d'un creuset, par exemple, en céramique ou en tout autre matériau adapté à la température de traitement.

Directement à l'issue d'un traitement thermique anhydre conforme à l'invention, on récupère une substance brute, solide de couleur blanche et correspondant à des agrégats plus ou moins grossiers formés de particules élémentaires de talc synthétique, agrégées les unes aux autres. Avantageusement et selon l'invention, à l'issue du traitement thermique anhydre, un broyage mécanique est prévu pour délier ces agrégats en particules de talc élémentaires individualisées et obtenir ainsi une composition pulvérulente. La répartition dimensionnelle de ces particules élémentaires est sensiblement unimodale et monodisperse.

Selon un mode préféré de mise en oeuvre, avantageusement et selon l'invention, on utilise une composition de kérolites préalablement préparée à partir d'un gel silicométallique de formule chimique Si₄Mg₃O₁₁,n'H₂O, au moyen d'un traitement hydrothermal approprié.

Dans ce cas, un procédé conforme à l'invention comprend également et avantageusement une étape préliminaire lors de laquelle on prépare une composition de kérolites, laquelle sera soumise ultérieurement à un traitement thermique anhydre comme précédemment énoncé.

Avantageusement et selon l'invention, on prépare ladite composition de kérolites à partir d'un gel silicométallique de formule Si₄Mg₃O₁₁,n'H₂O, auquel on a fait subir un traitement hydrothermal à pression d'eau saturante, de température comprise entre 100°C et 240°C, pendant une durée d'un jour à quelques mois.

Le choix des paramètres, notamment de température et de durée, dudit traitement hydrothermal permet un certain contrôle sur la granulométrie des particules de talc synthétique qui seront finalement obtenues. Selon les paramètres choisis, les particules de talc synthétique qui seront obtenues au final, auront une granulométrie allant de quelques dizaines de nanomètres à une dizaine de micromètres, avec une répartition granulométrique sensiblement unimodale et monodisperse.

Avantageusement et selon l'invention, on prépare le gel silicométallique par coprécipitation selon la réaction : 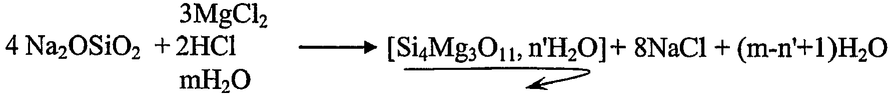 m, n' et (m-n'+1) étant des nombres entiers positifs.

Avantageusement et selon l'invention, la composition de kérolites directement issue du traitement hydrothermal dudit gel silicométallique est séchée puis broyée pour obtenir une composition pulvérulente avant de la soumettre audit traitement thermique anhydre. Pour ce faire, le séchage peut être réalisé au moyen d'une étuve ; par exemple, à une température de l'ordre de 60°C, pendant au moins un à deux jours. Le broyage est réalisé avantageusement de façon mécanique ; par exemple avec un mortier, de préférence en agate pour éviter tout risque de contamination de la composition de kérolites.

De façon très comparable aux particules de talc naturel, les particules de talc synthétique d'une composition conforme à l'invention ont une organisation microscopique en feuillets superposés ; chaque feuillet présente une structure cristalline composée d'une couche d'octaèdres (occupés par les cations Mg²⁺) intercalée entre deux couches de tétraèdres (occupés par les cations Si⁴⁺) inversées. Les similitudes structurelles existant entre un talc synthétique obtenu selon l'invention et un talc naturel ont été mises en évidence par des méthodes d'analyse en diffraction des rayons X et par absorption des infrarouges.

On notera toutefois que, à la différence d'une composition de talc naturel, dans une composition de talc synthétique selon l'invention, les particules sont exclusivement des particules de talc répondant à la formule chimique Si₄Mg₃O₁₀(OH)₂. En effet, il n'existe pas à l'heure actuelle de composition pulvérulente préparée à partir de talc naturel qui soit à 100 % pure.

Par ailleurs, analysée par exemple en diffraction des rayons X, la distinction entre un talc synthétique d'une composition selon l'invention et un talc naturel, apparaît essentiellement dans la position du pic de diffraction correspondant au plan (001). Pour un talc synthétique selon l'invention, ce pic de diffraction se trouve à une distance comprise entre 9,40 Å et 9,68 Å -au lieu de 9,35 Å pour le talc naturel-.

Avantageusement, une composition de talc synthétique selon l'invention se distingue en ce qu'une analyse en diffraction des rayons X des particules de talc conduit à l'obtention d'un diffractogramme présentant des pics de diffraction caractéristiques suivants :
- un pic situé à 9,40-9,68 Å, correspondant à un plan (001) ;
- un pic situé à 4,50-4,60 Å, correspondant à un plan (020) ;
- un pic situé à 3,10-3,20 Å, correspondant à un plan (003) ;
- un pic situé à 1,50-1,55 Å, correspondant à un plan (060).

Avantageusement et selon l'invention, le pic de diffraction correspondant au plan (001) est situé à une distance de l'ordre de 9,40-9,43 Å.

Egalement, dans une composition de talc synthétique conforme à l'invention, les particules minérales synthétiques présentent conjointement une cristallinité de bonne qualité et une granulométrie extrêmement fine, de quelques dizaines de nanomètres à une dizaine de micromètres. En effet, dans l'état actuel des techniques de broyage, à partir d'un talc naturel, des particules d'une telle finesse ne peuvent être obtenues qu'avec une "amorphisation" (diminution de la cristallinité) sévère du produit. En diffraction des rayons X, cette amorphisation se traduit notamment par une diminution de l'intensité des pics de diffraction caractéristiques, que sont notamment les pics situés à : 9,35 Å pour le plan (001), 4,55 Å pour le plan (020), 3,14 Å pour le plan (003), et 1,52 Å pour le plan (060).

Une composition de talc synthétique selon l'invention peut se présenter sous une forme "brute", comprenant des particules de talc synthétique agrégées les unes aux autres en agrégats. Une telle composition de talc synthétique peut être notamment issue directement d'un traitement thermique anhydre conforme à l'invention, avant qu'elle ne soit soumise à une séquence de broyage.

Une composition de talc synthétique selon l'invention peut, également et avantageusement, être présentée sous la forme d'une composition, pulvérulente et déshydratée, de particules de talc synthétique individualisées. Compte tenu de la pulvérulence de telles particules, du fait de leur faible granulométrie (de quelques dizaines de nanomètres à une dizaine de micromètres), celles-ci sont alors avantageusement mises en solution aux fins de conservation, jusqu'au moment de leur utilisation. Dans ce contexte, dans une composition de talc synthétique selon l'invention, les particules de talc sont présentes sous une forme individualisée et dispersée dans un liquide.

Avantageusement, dans une composition selon l'invention, les particules de talc ont une granulométrie inférieure à 500 nm -notamment comprise entre 20 nm et 100 nm-.

Avantageusement, dans une composition selon l'invention, les particules de talc ont une distribution granulométrique sensiblement unimodale et monodisperse.

L'invention concerne aussi un procédé de préparation d'une composition de talc synthétique, et une composition de talc, caractérisés en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent aux figures annexées dans lesquelles :
- la figure 1 montre trois spectres d'absorption enregistrés dans le moyen infrarouge, et qui correspondent à trois compositions minérales synthétiques particulières et conformes à l'invention,
- les figures 2a et 2b correspondent à des agrandissements des spectres de la figure 1, au niveau de zones particulières,
- la figure 3 montre trois spectres d'absorption enregistrés en proche infrarouge, correspondant aux trois compositions minérales synthétiques précédemment évoquées,
- la figure 4 montre les diffractogrammes correspondant à l'analyse en diffraction des rayons X effectuée sur trois autres compositions minérales synthétiques particulières et conformes à l'invention,
- la figure 5 montre les diffractogrammes comparatifs entre une composition de talc synthétique de taille nanométrique, préparée conformément à l'invention, et un échantillon de talc naturel, également de taille nanométrique, mais obtenu par un broyage mécanique intensif,
- les figures 6 et 7 sont des représentations schématiques qui illustrent respectivement l'organisation cristalline des particules de talc synthétique obtenues à partir d'une composition de kérolites, après une conversion par un traitement thermique anhydre selon l'invention, et l'organisation cristalline des particules de kérolites préparées par une réaction de coprécipitation selon l'invention.

### A/ - PROTOCOLE DE SYNTHÈSE D'UNE COMPOSITION DE TALC SYNTHÉTIQUE

Conformément à l'invention, la préparation d'une composition de talc synthétique consiste en un traitement thermique anhydre d'une composition de kérolites. Ce traitement thermique anhydre est réalisé à basse pression, inférieure à 5 bars (par exemple, à pression atmosphérique) et à une température supérieure à 300°C.

Bien que l'invention porte essentiellement sur ce traitement thermique anhydre, on décrira également ci-après un mode préférentiel de préparation d'un gel silicométallique ainsi qu'un mode préférentiel de traitement de ce gel en vue de l'obtention de ladite composition de kérolites. Un traitement thermique anhydre conforme à l'invention permet la conversion d'une kérolite en un talc parfaitement cristallisé et thermiquement stable. La granulométrie de ce talc peut être déterminée et ajustée en fonction des caractéristiques de la kérolite de départ, et du procédé de préparation de cette kérolite.

### 1/ - Préparation du gel silicométallique

Le gel silicométallique est préparé par une réaction de coprécipitation selon l'équation suivante :

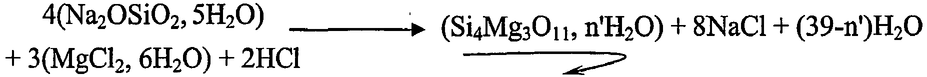

Cette réaction de coprécipitation permet d'obtenir un gel silicométallique hydraté ayant la stoechiométrie du talc (4 Si pour 3 Mg). Elle est mise en oeuvre à partir de :
1. une solution aqueuse de métasilicate de sodium penta-hydraté, préparée en diluant 0,1 mole de métasilicate de sodium dans 250 cm⁻³ d'eau distillée,
2. une solution de chlorure de magnésium, préparée en diluant 0,075 mole de chlorure de magnésium (sous la forme de cristaux hygroscopiques) dans 50 cm⁻³ d'eau distillée, et
3. 50 cm⁻³ d'acide chlorhydrique 1N.

La préparation du gel silicométallique est réalisée avec le protocole suivant :
1. on mélange les solutions d'acide chlorhydrique et de chlorure de magnésium,
2. on ajoute ce mélange à la solution de métasilicate de sodium ; le gel de coprécipitation se forme instantanément,
3. on récupère un gel après centrifugation (7000 tours par minute pendant 15 minutes) et élimination du surnageant (solution de chlorure de sodium formée),
4. on lave le gel à l'eau, par exemple avec de l'eau distillée, osmosée ou simplement avec de l'eau du robinet (au minimum deux cycles de lavage/centrifugation).

A l'issue de cette première phase, on obtient un gel silicométallique Si₄Mg₃O₁₁, n'H₂O, de couleur blanche et fortement hydraté. Sa consistance est gélatineuse.

### 2/ - Traitement du gel silicométallique pour obtenir une composition de kérolites

Avant de soumettre ce gel silicométallique à un traitement hydrothermal pour obtenir une composition de kérolites au sens de l'invention, celui-ci, de texture gélatineuse, est séché à l'étuve à 60°C, pendant deux jours. Ce temps de séchage, relativement long, s'explique par la forte hydratation du gel recueilli après centrifugation.

Les agrégats silicométalliques obtenus sont broyés avec un mortier en agate jusqu'à obtenir une poudre homogène.

Cette composition silicométallique pulvérulente est alors soumise à un traitement hydrothermal pour obtenir une composition de kérolites. Pour ce faire :
1. on place la composition silicométallique pulvérulente dans un réacteur (autoclave) avec de l'eau distillée dans un rapport liquide/solide de 0,83 (par exemple 200 g de composition pulvérulente pour 166 cm³ d'eau),
2. on place le réacteur dans une étuve à une température de l'ordre de 220°C et pour une durée de traitement d'un jour, ou plus,
3. au terme de ce traitement hydrothermal, la substance solide du milieu réactionnel est filtrée puis séchée.

On obtient au final une composition solide divisée, de couleur blanche correspondant à une composition de kérolites au sens de l'invention.

### 3/- Traitement thermique anhydre de la composition de kérolites

La composition de kérolites précédemment préparée est alors soumise à un traitement thermique anhydre. Pour ce faire, celle-ci est placée dans un creuset en platine puis est chauffée. On peut aussi utiliser un creuset en céramique, ou en tout autre matériau adapté à la température de traitement. Le chauffage de ladite composition est réalisé à pression atmosphérique.

### B/-ANALYSE ET CARACTÉRISATION STRUCTURELLES DES PRODUITS OBTENUS

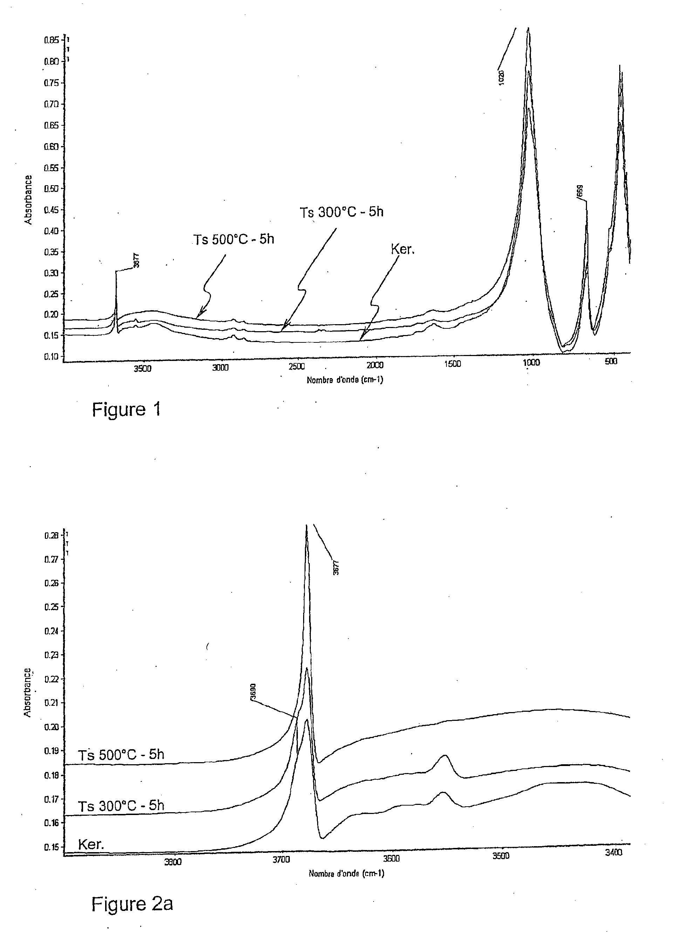

Les structures cristalline et lamellaire des particules de kérolites et des particules de talcs obtenues au cours et à l'issue de la mise en oeuvre du procédé précédemment défini ont été caractérisées par spectroscopie infrarouge en transmission et réflexion diffuse, et en diffraction des rayons X. Les données recueillies sont présentées aux figures 1, 2a, 2b, 3, 4 et 5, et sont ci-après commentées.

### 1/- Analyse en infrarouge

En infrarouge, il est connu que les bandes de vibration caractéristiques du talc naturel sont les suivantes (avec une résolution de 4 cm⁻¹) :
- 3678 cm⁻¹ : vibration de la liaison Mg₃-OH ;
- 1018 cm⁻¹ : vibration de la liaison Si-O-Si ;
- 669 cm⁻¹ : vibration de la liaison Mg-O-Si ;
- 7185 cm⁻¹ : vibration de la liaison 2vMg₃-OH.

La figure 1 présente les résultats d'analyses réalisées en moyen infrarouge sur :
- une composition de kérolites (Ker.) préparée selon la méthode précédemment décrite,
- une première composition de talc synthétique (Ts 300°C - 5h) obtenue à partir de la composition de kérolites précédente et avec un traitement thermique anhydre de 300°C, pendant une durée de 5 heures,
- une seconde composition de talc synthétique (Ts 500°C - 5h) obtenue à partir de la composition de kérolites précédente et avec un traitement thermique anhydre de 500°C, pendant une durée de 5 heures.

L'acquisition des spectres infrarouges a été réalisée avec un spectromètre Nicolet 510-FTIR sur un domaine de 4000 à 400 cm⁻¹.

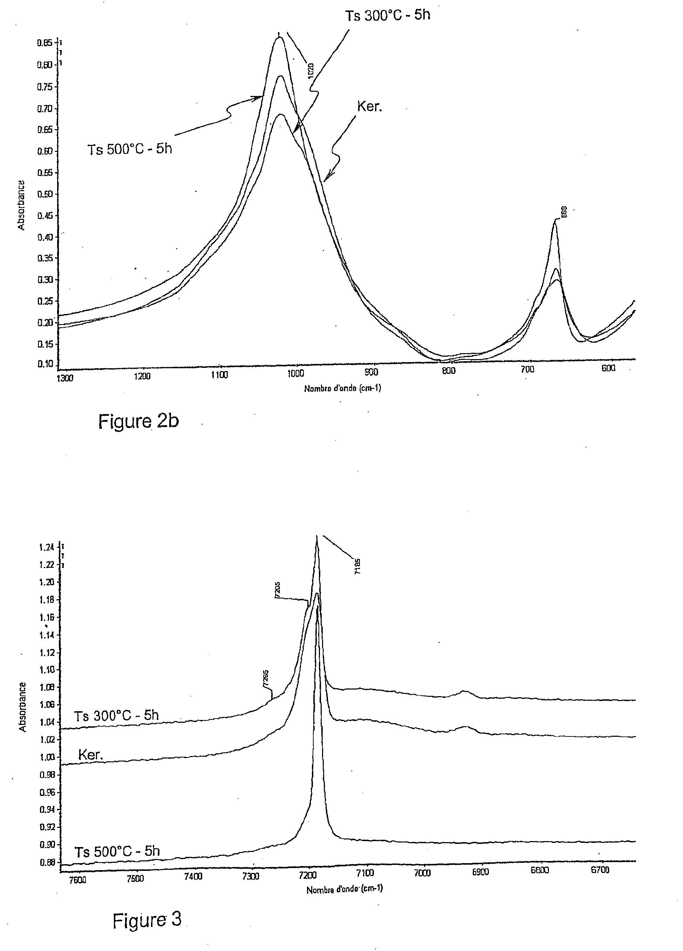

Par ailleurs, les figures 2a et 2b montrent des agrandissements des zones où se trouvent localisées les bandes de vibration à 3678 cm⁻¹, à 1018 cm⁻¹ et à 669 cm⁻¹.

Des mesures ont également été effectuées en réflexion diffuse dans le proche infrarouge en vue de visualiser la vibration de la liaison Mg₃-OH pointée à 7185 cm⁻¹. La figure 3 montre un agrandissement de la zone comprise entre 6000 cm⁻¹ à 8000 cm⁻¹.

Ces résultats montrent qu'un traitement thermique anhydre peut permettre la transformation d'une composition de kérolites synthétique en une composition de talc synthétique. Cette transformation se traduit notamment par l'apparition des quatre bandes de vibration caractéristiques du talc, dont la finesse reflète essentiellement la cristallinité du minéral.

Les inventeurs ont également fait le constat que la finesse de ces quatre bandes, et donc la cristallinité du minéral traité, augmente progressivement au cours du traitement thermique anhydre, et avec la durée de ce traitement (tous les résultats ne sont pas représentés sur les figures).

Il convient néanmoins de noter que l'agrandissement de la zone comprise entre 6000 cm⁻¹ à 8000 cm⁻¹ (figure 3) fait apparaître un pic à 7265 cm⁻¹, à proximité du pic à 7185 cm⁻¹ de référence. La présence de cette liaison traduit une légère hydratation du produit obtenu. Des molécules d'eau sont intercalées entre les feuillets du talc.

Les analyses précédentes confirment qu'un traitement thermique anhydre, notamment à 300°C ou à 500°C, permet de transformer une composition de kérolites en une composition de talc. Néanmoins, avec un traitement thermique anhydre réalisé à une température de l'ordre de 300°C seulement, l'obtention d'un degré d'hydratation similaire à celui d'un talc naturel est longue.

Par contre avec un traitement thermique anhydre à une température de l'ordre de 500°C, la composition minérale traitée acquiert une cristallinité et un taux d'hydratation très comparables à celles d'un talc naturel en un temps relativement court (dès 5 heures environ de traitement).

### 2/- Analyses en diffraction des rayons X

En diffraction des rayons X, le talc naturel est connu pour présenter quatre pics de diffraction caractéristiques :
- pour le plan (001), un pic situé à une distance de 9,35 Å ;
- pour le plan (020), un pic situé à 4,55 Å ;
- pour le plan (003), un pic situé à 3,14 Å ;
- pour le plan (060), un pic situé à 1,52 Å.

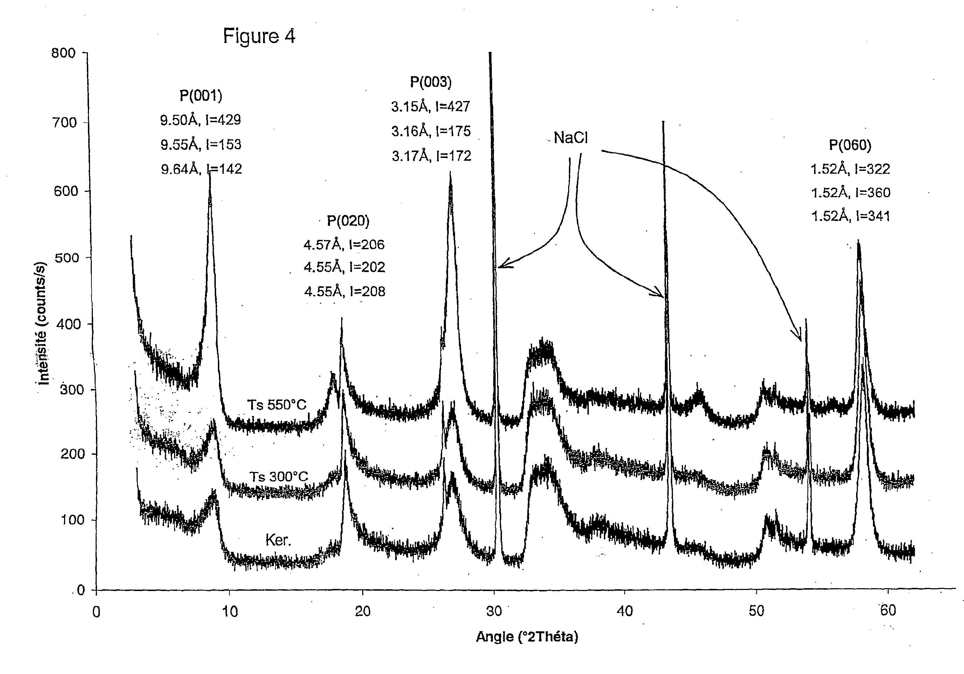

La figure 4 présente les résultats d'analyses réalisées sur :
- une composition de kérolites (Ker.) préparée selon la méthode de coprécipitation précédemment décrite,
- une première composition de talc synthétique (Ts 300°C) obtenue à partir de la composition de kérolites précédente et avec un traitement thermique anhydre de 300°C, pendant une durée de 5 heures,
- une seconde composition de talc synthétique (Ts 550°C) obtenue à partir de la composition de kérolites précédente et avec un traitement thermique anhydre de 550°C, pendant une durée de 5 heures.

Les diffractogrammes, présentés à la figure 4, ont été réalisés sur un appareil XPERT - MPD PanAnalytical.

Le pas de mesure 2θ est de 0,01° avec un temps d'accumulation de 2 sec/pas. La tension d'accélération est de 40 kV, l'intensité de 55 mA. La relation de Bragg donnant l'équidistance structurale est de dₕₖₗ=0,7703/sinθ.

Ces analyses confirment ce qui a été observé en spectroscopie infrarouge.

Les pics caractéristiques du talc s'intensifient avec un traitement thermique anhydre aussi bien à 550°C qu'à 300°C, et cette intensité augmente avec la durée du traitement.

Après 5 heures seulement d'un traitement thermique anhydre de 550°C, les pics de diffraction caractéristiques du talc s'affinent. En particulier, le pic de diffraction correspondant au plan (001) passe d'une position à 9,64 Å à 9,50 Å ; on se rapproche fortement de la valeur de 9,35 Å caractéristique d'un talc naturel. Cet écart de valeurs reflète une très légère hydratation résiduelle du talc synthétique et/ou une taille très petite des particules (taille nanométrique). Cependant, il faut noter que l'hydratation est de moins en moins prononcée lorsque la durée du traitement thermique anhydre augmente.

Une mesure de la largeur à mi-hauteur des pics des plans (001), (020), (003) et (060) montre l'évolution de la cristallinité et confirme que, pour une température de traitement supérieure à 300°C, plus le temps de synthèse augmente, plus la cristallinité du talc s'améliore (la largeur à mi-hauteur diminue avec le temps de traitement).

Les diffractogrammes présentés à la figure 4 font aussi apparaître la présence des pics de diffraction caractéristiques du chlorure de sodium (NaCl). La présence de ces pics traduit un lavage et un rinçage insuffisants du gel silicométallique, préalables au traitement hydrothermal. En l'occurrence, les trois compositions analysées ont été préparées avec seulement un cycle de lavage du gel silicométallique.

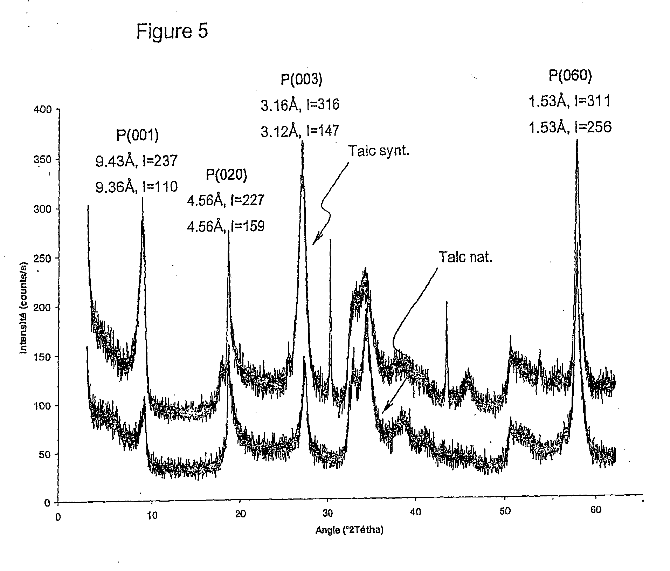

La figure 5 présente, pour comparaison, un diffractogramme RX d'un échantillon de talc synthétique (Talc synth.) selon l'invention, dont les particules de talc sont de taille nanométrique, comprise entre 20 et 100 nm, et d'un échantillon de talc naturel (Talc nat.) de l'état de la technique broyé mécaniquement jusqu'à obtenir des particules ayant une granulométrie de l'ordre de 70-120 nm.

Une première différence entre le talc naturel et le talc synthétique apparaît dans la position des pics de diffraction correspondant aux plans (001) et (003) :
- pour le plan (001) : 9,43 Å pour le talc synthétique, au lieu de 9,36 Å pour le talc naturel ;
- pour le plan (003) : 3,16 Å pour le talc synthétique, au lieu de 3,12 Å pour le talc naturel.

Le talc naturel (Talc nat.) nanométrique se différencie aussi du talc synthétique (Talc synth.) par une intensité de ces pics de diffraction beaucoup plus faible.

De plus, par rapport au talc synthétique de taille nanométrique préparé conformément à l'invention, le talc nanométrique naturel présente des pics de diffraction avec des largeurs à mi-hauteur plus grandes (pour une même préparation et un temps de comptage identique). Ces données traduisent une meilleure cristallinité pour le talc synthétique nanométrique préparé selon l'invention. Le broyage intensif d'un talc naturel pour obtenir un talc de taille nanométrique entraîne une amorphisation considérable du produit.

### C/ - STRUCUTRE THÉORIQUE DES PARTICULES DE KÉROLITES SYNTHÉTIQUES OBTENUES SELON L'INVENTION

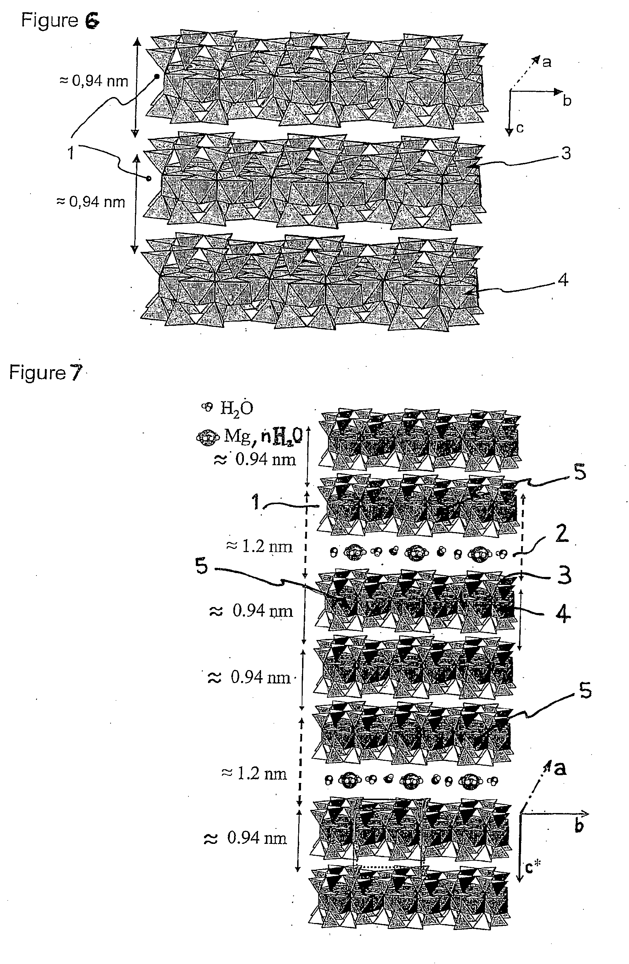

Faisant référence aux figures 6 et 7 qui en présentent de façon schématique les structures stratifiées et cristallines, le talc et la kérolite ont une organisation microscopique en feuillets élémentaires 1 superposés, dont le nombre varie de quelques unités à quelques dizaines d'unités.

Aussi bien pour le talc que pour la kérolite, la structure cristalline des feuillets élémentaires 1, est constituée par l'association de deux couches tétraédriques situées de part et d'autre d'une couche octaédrique.

La couche octaédrique est formée de deux plans d'ions O²⁻ et OH⁻ (dans la proportion molaire O²⁻/OH⁻ de 2:1). De part et d'autre de cette couche médiane viennent s'agencer des réseaux tridimensionnels de tétraèdres 3 dont un des sommets est occupé par un oxygène commun à la couche tétraédrique et à la couche octaédrique, tandis que les trois autres le sont par des oxygènes sensiblement coplanaires appartenant à une couche tétraédrique.

En l'espèce représenté, s'agissant des talcs synthétiques et kérolites préparés conformément à l'invention, les cavités tétraédriques sont occupées par des ions Si⁴⁺ et les cavités octaédriques le sont par les cations Mg²⁺.

A la différence du talc, le réseau cristallin d'une kérolite présente des lacunes 5 ; une petite proportion des sites octaédriques n'est pas occupée. Il en résulte un déficit cationique. Ce déficit cationique est en grande partie comblé par la présence de cations, dits cations compensateurs, qui occupent les espaces interfoliaires 2. Ces espaces interfoliaires 2, fortement hydratés, constituent également une caractéristique distinctive de la structure cristalline des kérolites par rapport à celle des talcs purs.

Ces lacunes 5 expliquent la faible cristallinité observée notamment sur les diffractogrammes RX.

Les tests de traitement thermique anhydre des compositions de kérolites synthétiques conformes à l'invention ont montré une conversion de ces compositions en des compositions de talc synthétique. En particulier, on observe un affinement progressif des pics de diffraction caractéristiques au niveau des plans (001), (020), (003) et (060), qui traduit une amélioration de la cristallinité des feuillets 1. Progressivement, les lacunes 5 sont comblées par les cations des espaces interfoliaires 2. Et, de manière concomitante, les espaces interfoliaires s'amincissent (passant de 12 Å à des valeurs de l'ordre de 9,4-9,6 Å) ; dans le plan (001), le pic de diffraction caractéristique se rapproche de la distance 9,35 Å, caractéristique d'un talc naturel.

## Revendications

1. Procédé de préparation d'une composition de talc synthétique, dans lequel on soumet une composition de kérolites à un traitement thermique anhydre effectué à une pression inférieure à 5 bars, pendant une durée et avec une température de traitement supérieure à 300°C, choisies de façon à obtenir des particules de talc synthétique thermiquement stable et de formule Si₄Mg₃O₁₀(OH)₂.

2. Procédé selon la revendication 1, **caractérisé en ce qu'**on réalise ledit traitement thermique anhydre à une température de l'ordre de 500-550°C.

3. Procédé selon la revendication 2, **caractérisé en ce que** la durée du traitement est supérieure à 5 heures.

4. Procédé selon l'une des revendications 1 à 3, **caractérisé en ce qu'**on réalise ledit traitement thermique anhydre à l'air ambiant, à l'intérieur d'un creuset.

5. Procédé selon l'une des revendications 1 à 4, **caractérisé en ce qu'**on réalise un broyage mécanique de ladite composition de talc synthétique pour obtenir une composition pulvérulente.

6. Procédé selon l'une des revendications 1 à 5, **caractérisé en ce qu'**on prépare ladite composition de kérolites à partir d'un gel silicométallique de formule Si₄Mg₃O₁₁, n'H₂O auquel on a fait subir un traitement hydrothermal à pression d'eau saturante, de température comprise entre 100°C et 240°C, pendant une durée d'un jour à quelques mois.

7. Procédé selon la revendication 6, **caractérisé en ce qu'**on soumet au traitement thermique anhydre, ladite composition de kérolites après l'avoir séchée et broyée pour obtenir une composition pulvérulente.

8. Procédé selon l'une des revendications 6 ou 7, **caractérisé en ce qu'**on prépare ledit gel silicométallique par coprécipitation selon la réaction : 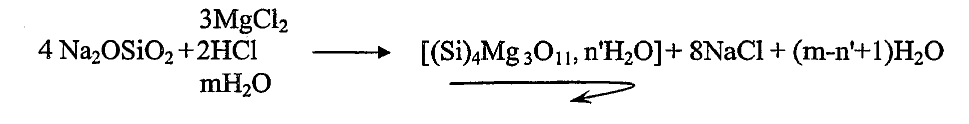 m, n' et (m-n'+1) étant des nombres entiers positifs.

9. Composition de talc synthétique comprenant des particules de talc de formule Si₄Mg₃O₁₀(OH)₂ ;
ladite composition étant **caractérisée en ce qu'**une analyse en diffraction des rayons X desdites particules de talc conduit à l'obtention d'un diffractogramme présentant des pics de diffraction caractéristiques suivants :
- un pic situé à 9,40-9,68 Å, correspondant à un plan (001) ;
- un pic situé à 4,50-4,60 Å, correspondant à un plan (020) ;
- un pic situé à 3,10-3,20 Å, correspondant à un plan (003);
- un pic situé à 1,50-1,55 Å, correspondant à un plan (060).

10. Composition selon la revendication 9, **caractérisée en ce que** le pic de diffraction correspondant au plan (001) est situé à une distance de l'ordre de 9,40-9,43 Å.

11. Composition selon l'une des revendications 9 ou 10, **caractérisée en ce que** lesdites particules de talc ont une granulométrie inférieure à 500 nm.

12. Composition selon l'une des revendications 9 à 11, **caractérisée en ce que** lesdites particules de talc ont une granulométrie comprise entre 20 nm et 100 nm.

13. Composition selon l'une des revendications 9 à 12, **caractérisée en ce que** lesdites particules de talc sont présentes sous une forme individualisée et pulvérulente.

14. Composition selon l'une des revendications 9 à 13, **caractérisée en ce que** lesdites particules de talc sont présentes sous une forme individualisée et dispersée dans un liquide.

15. Composition selon l'une des revendications 9 à 14, **caractérisée en ce que** lesdites particules de talc sont présentes sous une forme agglomérée les unes aux autres et forment des agrégats.

## Patentansprüche

1. Verfahren zur Herstellung einer synthetischen Talkzusammensetzung, wobei eine Keolitzusammensetzung einer wasserfreien thermischen Behandlung unterzogen wird, die bei einem Druck von weniger als 5 bar während einer Dauer und mit einer Behandlungstemperatur von mehr als 300 °C durchgeführt wird, die derart ausgewählt werden, dass thermisch stabile synthetische Talkpartikel mit der Formel Si₄Mg₃O₁₀(OH)₂ erhalten werden.

2. Verfahren nach Anspruch 1, **dadurch gekennzeichnet, dass** die wasserfreie thermische Behandlung bei einer Temperatur im Bereich von 500-550 °C durchgeführt wird.

3. Verfahren nach Anspruch 2, **dadurch gekennzeichnet, dass** die Dauer der Behandlung mehr als 5 Stunden beträgt.

4. Verfahren nach einem der Ansprüche 1 bis 3, **dadurch gekennzeichnet, dass** die wasserfreie thermische Behandlung in der Umgebungsluft im Inneren eines Schmelztiegels durchgeführt wird.

5. Verfahren nach einem der Ansprüche 1 bis 4, **dadurch gekennzeichnet, dass** ein mechanisches Mahlen der synthetischen Talkzusammensetzung durchgeführt wird, um eine pulverförmige Zusammensetzung zu erhalten.

6. Verfahren nach einem der Ansprüche 1 bis 5, **dadurch gekennzeichnet, dass** die Kerolitzusammensetzung auf der Grundlage von einem Siliziummetallgel mit der Formel Si₄Mg₃O₁₁, n'H₂O hergestellt wird, das einer hydrothermalen Behandlung mit Sättigungswasserdruck mit einer Temperatur zwischen 100 °C und 240 °C während einer Dauer von einem Tag bis zu mehreren Monaten unterzogen wird.

7. Verfahren nach Anspruch 6, **dadurch gekennzeichnet, dass** die Kerolitzusammensetzung der wasserfreien thermischen Behandlung unterzogen wird, nachdem sie getrocknet und gemahlen wurde, um eine pulverförmige Zusammensetzung zu erhalten.

8. Verfahren nach einem der Ansprüche 6 oder 7, **dadurch gekennzeichnet, dass** das Siliziummetallgel durch Mitfällung gemäß der folgenden Reaktion hergestellt wird: 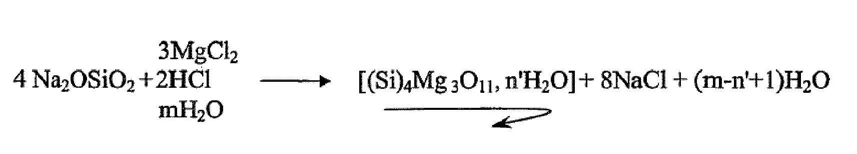 wobei m, n' und (m-n'+1) positive ganze Zahlen sind.

9. Synthetische Talkzusammensetzung, umfassend Talkpartikel mit der Formel Si₄Mg₃O₁₀(OH)₂;
wobei die Zusammensetzung **dadurch gekennzeichnet ist, dass** eine Diffraktionsanlayse der Röntgenstrahlung der Talkpartikel zum Erhalt eines Diffraktogramms führt, das die folgenden charakteristischen Diffraktionsspitzen aufweist:
- eine Spitze die sich bei 9,40 - 9,68 Å befindet, entsprechend einer Ebene (001);
- eine Spitze, die sich bei 4,50 - 4,60 Å, entsprechend einer Ebene (020);
- eine Spitze die sich bei 3,10 - 3,20 Å befindet, entsprechend einer Ebene (003);
- eine Spitze die sich bei 1,50 - 1,55 Å befindet, entsprechend einer Ebene (060).

10. Zusammensetzung nach Anspruch 9, **dadurch gekennzeichnet, dass** sich die Diffraktionsspitze, die der Ebene (001) entspricht, in einem Abstand im Bereich von 9,40 - 9,43 Å befindet.

11. Zusammensetzung nach einem der Ansprüche 9 oder 10, **dadurch gekennzeichnet, dass** die Talkpartikel eine Granulometrie von weniger als 500 nm aufweisen.

12. Zusammensetzung nach einem der Ansprüche 9 bis 11, **dadurch gekennzeichnet, dass** die Talkpartikel eine Granulometrie aufweisen, die zwischen 20 nm und 100 nm liegt.

13. Zusammensetzung nach einem der Ansprüche 9 bis 12, **dadurch gekennzeichnet, dass** die Talkpartikel in einer individualisierten und pulvrigen Form vorhanden sind.

14. Zusammensetzung nach einem der Ansprüche 9 bis 13, **dadurch gekennzeichnet, dass** die Talkpartikel in einer individualisierten und in einer Flüssigkeit dispergierten Form vorhanden sind.

15. Zusammensetzung nach einem der Ansprüche 9 bis 14, **dadurch gekennzeichnet, dass** die Talkpartikel in einer miteinander agglomerierten Form vorhanden sind und Aggregate bilden.

## Claims

1. A method for preparing a synthetic talc composition, in which a kerolite composition is subjected to an anhydrous thermal treatment carried out at a pressure below 5 bar for a period and at a treatment temperature greater than 300°C, chosen so as to obtain thermally stable synthetic talc particles of the formula Si₄Mg₃O₁₀(OH)₂.

2. The method according to claim 1, **characterised in that** said anhydrous thermal treatment is carried out at a temperature of the order of from 500 to 550°C.

3. The method according to claim 2, **characterised in that** the treatment time is greater than 5 hours.

4. The method according to any one of claims 1 to 3, **characterised in that** said anhydrous thermal treatment is carried out in ambient air, inside a crucible.

5. The method according to any one of claims 1 to 4, **characterised in that** mechanical grinding of said synthetic talc composition is carried out in order to obtain a pulverulent composition.

6. The method according to any one of claims 1 to 5, **characterised in that** said kerolite composition is prepared from a silicometallic gel of the formula Si₄Mg₃O₁₁,n'H₂O, which is subjected to a hydrothermal treatment at saturation water vapour pressure and at a temperature of from 100°C to 240°C, for a period of from one day to several months.

7. The method according to claim 6, **characterised in that** said kerolite composition is subjected to the anhydrous thermal treatment after it has been dried and ground to obtain a pulverulent composition.

8. The method according to either claim 6 or claim 7, **characterised in that** said silicometallic gel is prepared by coprecipitation according to the reaction 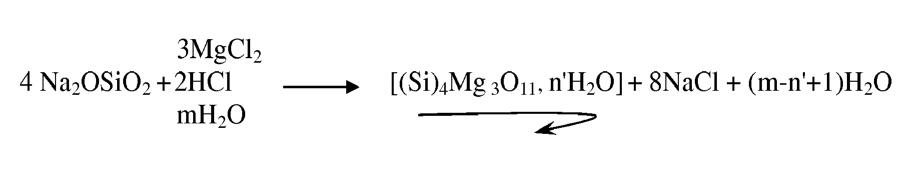 m, n' and (m-n'+1) being positive integers.

9. A synthetic talc composition comprising talc particles of the formula Si₄Mg₃O₁₀(OH)₂;
said composition being **characterised in that** an X-ray diffraction analysis of said talc particles yields a diffractogram having the following characteristic diffraction peaks:
- a peak located at 9.40-9.68 Å, corresponding to a plane (001);
- a peak located at 4.50-4.60 Å, corresponding to a plane (020);
- a peak located at 3.10-3.20 Å, corresponding to a plane (003);
- a peak located at 1.50-1.55 Å, corresponding to a plane (060).

10. The composition according to claim 9, **characterised in that** the diffraction peak corresponding to the plane (001) is located at a distance of the order of 9.40-9.43 Å.

11. The composition according to claim 9 or claim 10, **characterised in that** said talc particles have a particle size less than 500 nm.

12. The composition according to any one of claims 9 to 11, **characterised in that** said talc particles have a particle size of from 20 nm to 100 nm.

13. The composition according to any one of claims 9 to 12, **characterised in that** said talc particles are present in individualised and pulverulent form.

14. The composition according to any one of claims 9 to 13, **characterised in that** said talc particles are present in individualised form dispersed in a liquid.

15. The composition according to any one of claims 9 to 14, **characterised in that** said talc particles are present in a form agglomerated with one another and form aggregates.
